(19) Europäisches Patentamt
European Patent Office
Office européen des brevets

(11) Veröffentlichungsnummer: **0 327 886**
**A2**

(12) # EUROPÄISCHE PATENTANMELDUNG

(21) Anmeldenummer: **89101256.9**

(22) Anmeldetag: **25.01.89**

(51) Int. Cl.$^4$: **C08G 18/61 , C08G 77/38 , C09D 3/72 , C09D 7/12**

(30) Priorität: **06.02.88 DE 3803628**

(43) Veröffentlichungstag der Anmeldung: **16.08.89 Patentblatt 89/33**

(84) Benannte Vertragsstaaten: **BE DE ES FR GB IT NL SE**

(71) Anmelder: **BAYER AG**

**D-5090 Leverkusen 1 Bayerwerk(DE)**

(72) Erfinder: **Williams, John Lewis, Dr.**
**Nietzschestrasse 12**
**D-5090 Leverkusen 1(DE)**
Erfinder: **Dederichs, Reinhold**
**Kurt-Schumacher-Ring 86**
**D-5090 Leverkusen 1(DE)**
Erfinder: **Schlak, Ottfried, Dr.**
**Kalkweg 2**
**D-5000 Köln 80(DE)**
Erfinder: **Käsler, Karl Heinz**
**Im Plackenbruch 26a**
**D-5060 Bergisch-Gladbach 2(DE)**
Erfinder: **Grigo, Ulrich, Dr.**
**Michelsheide 9**
**D-4152 Kempen 3(DE)**
Erfinder: **Nouvertné, Werner, Dr.**
**Scheiblerstrasse 95**
**D-4150 Krefeld(DE)**

(54) **Verwendung von Aminogruppen aufweisenden Polysiloxanen als Zusatzmittel in Kunststofflacken.**

(57) Die Verwendung von Aminogruppen aufweisenden Polysiloxanen als den Verlauf und die Benetzung verbessernde Zusatzmittel in Kunststofflacken auf Polyurethanbasis, deren Bindemittel aus einem ausreagierten, in organischen Lösungsmitteln löslichen Polyurethan oder aus einem Zweikomponenten-System auf Basis einer Polyisocyanatkomponente und einer Polyhydroxylkomponente oder aus einem Einkomponenten-System auf Basis einer Polyisocyanatkomponente mit blockierten Isocyanatgruppen und einer Polyhydroxylkomponente besteht.

EP 0 327 886 A2

# Verwendung von Aminogruppen aufweisenden Polysiloxanen als Zusatzmittel in Kunststofflacken

Die Erfindung betrifft die Verwendung von Aminogruppen aufweisenden Polysiloxanen als den Verlauf und die Benetzung verbessernde Zusatzmittel in Kunststofflacken auf Polyurethanbasis.

Kunststoffe, insbesondere Thermoplaste, finden einen immer breiteren Eingang in die Automobilindustrie, wo sie beispielsweise zur Herstellung von Stoßfängern, Spoilern, zur Verkleidung von Außenteilen oder zur Herstellung von sonstigen Karosserieelementen verwendet werden.

Es ist im allgemeinen üblich, diese Kunststoffteile aus Design- oder Schutzgründen mit einer Lackschicht zu versehen. Dabei hat sich herausgestellt, daß die Benetzbarkeit der Kunststoffe mit den üblicherweise verwendeten Ein- und Zweikomponenten-Polyurethanlacken sehr begrenzt ist. Dies wirkt sich insbesondere nachteilhaft im Falle einer Mehrschichtlackierung aus, deren erste Schicht aus einem Grundlack auf Basis eines physikalisch trocknenden oder chemisch vernetzenden Polyurethan-Bindemittels besteht. Wegen der schlechten Benetzung der Kunststoffoberfläche mit dem meistens nur in sehr dünner Schicht aufgetragenen Grundlack resultieren letztendlich Lackfehler wie z.B. Nadelstiche bzw. unruhige, schlecht verlaufende Oberflächen, die darauf zurückzuführen sind, daß die einzelnen Lacktröpfchen der Grundlackierung wegen der schlechten Benetzung nicht ineinander verfließen. Darüber hinaus besteht die Gefahr, daß an den nicht mit Grundlack benetzten Stellen der Decklack direkt mit dem Substrat in Kontakt kommt und beispielsweise bei Verwendung von aggressiven Decklacklösungsmitteln der Kunststoffuntergrund angegriffen wird.

Überraschenderweise wurde jetzt gefunden, daß Aminogruppen aufweisende Polysiloxane hervorragend als Zusatzmittel für Kunststofflacke geeignet sind, um die genannten Probleme bezüglich der Benetzung und des Verlaufs zu beheben.

Gegenstand der Erfindung ist die Verwendung von Aminogruppen aufweisenden Polysiloxanen als den Verlauf und die Benetzung verbessernde Zusatzmittel in Kunststofflacken auf Polyurethanbasis.

Bei den erfindungsgemäß zu verwendenden, Aminogruppen aufweisenden Polysiloxanen handelt es sich um beliebige, in Lacklösungsmitteln lösliche Polysiloxane des Molekulargewichtsbereichs 400 bis 110 000, vorzugsweise 1000 bis 10 000, die im allgemeinen 0,01 bis 6 Gew.-%, vorzugsweise 0,05 bis 1 Gew.-% Stickstoff in Form von primären, sekundären oder tertiären Aminogruppen aufweisen.

Gut geeignet sind beispielsweise Aminogruppen aufweisende Polysiloxane, in deren Molekül in statistischer Verteilung Struktureinheiten der Formel I bis VI

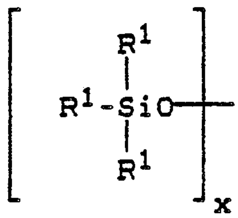

I

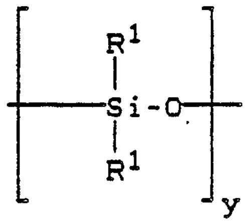

II

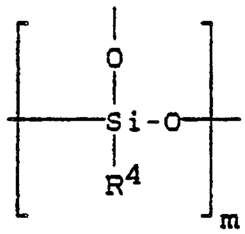

III

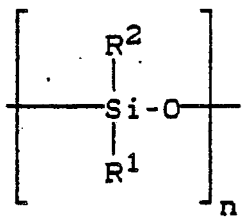

IV

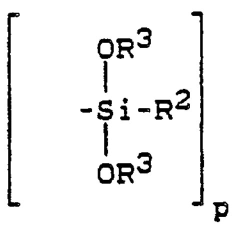

V

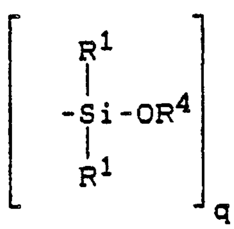

VI

vorliegen, wobei
$R^1$ unabhängig voneinander jeweils für Alkylgruppen mit 1 bis 6 Kohlenstoffatomen, Vinylgruppen, oder Phenylgruppen steht,

$R^2$ für einen aminogruppenhaltigen Alkyl- oder Arylrest mit primären, sekundären oder tertiären Aminogruppen und insgesamt 2 bis 20 Kohlenstoffatomen steht,
$R^3$ für Alkylgruppen mit 1 bis 6 Kohlenstoffatomen steht,
$R^4$ für $C_1$-$C_6$-Alkylgruppen, Phenylgruppen und/oder Aminoalkylgruppen mit 2 bis 20 Kohlenstoffatomen steht,
und die einzelnen Struktureinheiten im statistischen Mittel pro Molekül in der durch die Indices x, y, m, n, p und q angegebenen Anzahl vorliegen, wobei
m, q und x für gleiche oder verschiedene, ganze oder (im statistischen Mittel) gebrochene Zahlen von 0 bis 5 stehen,
die Summe m + n + p eine ganze oder (im statistischen Mittel) gebrochene Zahl von 1 bis 20 ergibt und
y für eine ganze oder (im statistischen Mittel) gebrochene Zahl von 10 bis 1400 steht,
mit der Maßgabe, daß die Art der Substituenten und die Zahlenwerte der Indices innerhalb der genannten Bereiche so gewählt werden, daß die obengenannten Werte bezüglich des Molekulargewichts und des Stickstoffgehalts der Polysiloxane resultieren.

Vorzugsweise stehen in diesen Formeln
$R^1$ für Methylgruppen,
$R^2$ für Aminoalkylreste mit 2 bis 7 Kohlenstoffatomen,
$R^3$ für Methyl- und/oder Ethylgruppen,
$R^4$ für Alkylgruppen mit 1 bis 2 Kohlenstoffatomen oder für Aminoalkylgruppen mit 2 bis 6 Kohlenstoffatomen.

Weiterhin bevorzugt sind solche Aminogruppen aufweisende Polysiloxane, für welche die Summe m + n + p eine ganze oder gebrochene Zahl von 2 bis 10 ergibt und y für eine ganze oder gebrochene Zahl von 20 bis 800 steht.

Besonders gut geeignete Aminogruppen aufweisende Polysiloxane sind solche der Formel VII

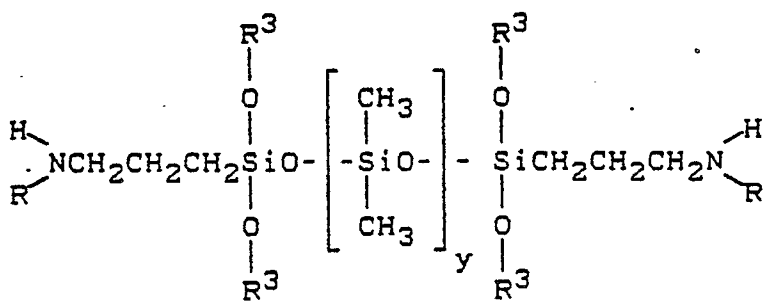

VII

bzw. solche, in denen die unter VIII genannten Struktureinheiten in statistischer Verteilung in der angegebenen Anzahl vorliegen

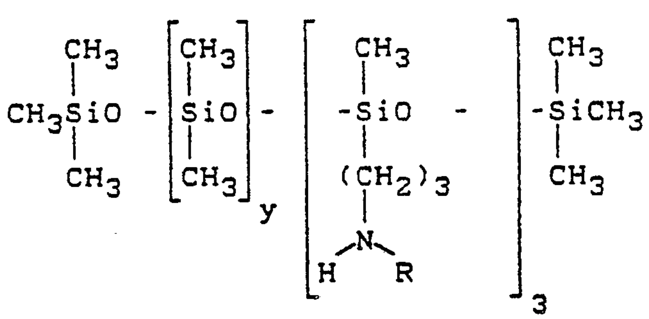

VIII

wobei in diesen Formeln
R für Wasserstoff, $C_1$-$C_4$-Alkylreste und/oder Aminoalkylreste mit 2 bis 6 Kohlenstoffatomen steht,
$R^3$, $R^4$, q, m und y die obige Bedeutung haben.

Die erfindungsgemäß zu verwendenden, beispielhaft offenbarten, Aminogruppen aufweisenden Polysiloxane sind an sich bekannt. Sie können z.B. durch Umsetzung von γ-Aminopropyl-trialkoxysilan mit α,ω-hydroxyendständigen Polydimethylsiloxanen oder durch Äquilibrierung von Octamethylcyclotetrasiloxan mit aminofunktionellen Siloxanen hergestellt werden. Weitere Herstellungsmöglichkeiten sind beispielsweise in

UP-PS 2 909 549 beschrieben.

Die erfindungsgemäß zu verwendenden Aminopolysiloxane werden im allgemeinen in einer Menge von 0,1 bis 5, vorzugsweise 0,5 bis 2 Gew.-%, bezogen auf das Gewicht des gebrauchsfertigen Lacks, verwendet. Diese Zahlenangaben beziehen sich jedoch lediglich auf eine bevorzugte Arbeitsweise, so daß auch die Verwendung von geringeren oder höheren Mengen der erfindungsgemäßen Zusatzstoffe denkbar ist.

Die erfindungsgemäße Verwendung der genannten Aminopolysiloxane erlaubt insbesondere die Verbesserung von Einkomponenten- und Zweikomponenten-Polyurethanlacken zwecks Verbesserung des Verlaufs der Lacke auf Kunststoffoberflächen bzw. zwecks Verbesserung der Benetzung der Kunststoffoberflächen mit dem Lack.

Geeignete Einkomponenten-Polyurethanlacke sind insbesondere solche auf Basis von überwiegend linearen, ausreagierten, in organischen Lacklösungsmitteln löslichen Polyurethanen, die keine Reaktivgruppen mehr aufweisen und somit rein physikalisch trocknen (vgl. beispielsweise Kunststoff-Handbuch 7 "Polyurethane", herausgegeben von Günter Oertel, Carl Hanser Verlag München/Wien (1983), Seite 551). Gut geeignete derartige, physikalisch trocknende Lacke sind z.B. solche, deren Bindemittel aus einem ausreagierten, linearen Polyurethan auf Basis (i) eines Polyesterdiols, (ii) eines Kettenverlängerungsmittels und (iii) eines Diisocyanats besteht. Geeignete Polyesterdiole (i) zur Herstellung derartiger Polyurethane sind insbesondere Adipinsäure-Alkandiol-Polyesterdiole des Molekulargewichtsbereichs 600 bis 3000, wobei als Alkandiole in diesen Polyesterdiolen beispielsweise 1,4-Butandiol, 1,6-Hexandiol, Neopentylglykol oder Gemische derartiger Diole vorliegen. Geeignete Kettenverlängerungsmittel (ii) sind einerseits Diole der auch zur Herstellung der Polyesterdiole eingesetzten Art oder auch Diamine wie beispielsweise Hexamethylendiamin oder Isophorondiamin. Geeignete Diisocyanate (iii) zur Herstellung der Polyurethane sind beispielsweise 4,4′-Diisocyanatodiphenylmethan oder Isophorondiisocyanat. Die Herstellung der Polyurethane ist an sich bekannt, sie erfolgt üblicherweise unter Verwendung annähernd äquivalenter Mengen der Ausgangsmaterialien (NCO/H-Äquivalentverhältnis = 0,9:1 bis 1,1:1).

Bei den erfindungsgemäß in Betracht kommenden Zweikomponenten-Polyurethanlacken handelt es sich um solche, deren Bindemittel ein Zweikomponenten-System aus einer Polyisocyanatkomponente und einer Polyhydroxylkomponente darstellt. Derartige Zweikomponenten-Polyurethanlacke sind beispielsweise in dem obengenannten Handbuch auf Seiten 541 bis 544 beschrieben.

Für die erfindungsgemäße Verwendung ebenfalls geeignet, jedoch weniger bevorzugt, sind auch chemisch härtende Einkomponenten-Lacke, die weitgehend den genannten Zweikomponenten-Lacken entsprechen, wobei jedoch die Polyisocyanatkomponente in mit Blockierungsmitteln für Isocyanatgruppen blockierter Form vorliegt. Derartige, chemisch härtbare Einkomponenten-Lacke sind in dem genannten Handbuch beispielsweise auf den Seiten 553 bis 554 beschrieben.

Im Falle der chemisch härtenden Zweikomponenten-Polyurethanlacke, in denen freie Isocyanatgruppen vorliegen, werden vorzugsweise solche Aminopolysiloxane eingesetzt, in denen ausschließlich tertiäre Aminogruppen vorliegen. Die erfindungsgemäße Verwendung eignet sich ganz besonders bevorzugt zur beschriebenen Verbesserung von physikalisch trocknenden Einkomponenten-Polyurethanlacken der genannten Art.

Neben den Bindemitteln und den erfindungswesentlichen Zusatzmitteln enthalten die Lacke selbstverständlich noch die üblichen Hilfs- und Zusatzmittel wie beispielsweise Lösungsmittel der an sich bekannten Art, ferner gegebenenfalls Pigmente, Füllstoffe, Verlaufhilfsmittel, Antiabsetzmittel oder andere aus der Lacktechnologie bekannte Zusatzstoffe.

Besonders bevorzugt dient die erfindungsgemäße Verwendung der Verbesserung von Grundlacken für Kunststoffe auf Basis der genannten physikalisch trocknenden Einkomponenten-Bindemittel. Diese Grundierungen werden im allgemeinen in dünner Schicht (Trockenfilmstärke ca. 5 bis 15 µm) auf das zu lackierende Kunststoffteil aufgetragen, worauf sich, nach erfolgter physikalischer Trocknung, die weitere Lackierfolge (Decklackapplikation) anschließt. Die erfindungsgemäße Verwendung der erfindungswesentlichen Aminopolysiloxane in der Grundierung hat zur Folge, daß eine einwandfreie Benetzung des zu lackierenden Kunststoffs erfolgt, so daß letztendlich Lackierungen ohne die obengenannten Fehler resultieren.

Die erfindungsgemäße Verwendung der Aminogruppen aufweisenden Polysiloxane ist jedoch nicht auf die genannte Verbesserung von Grundlacken beschränkt. Sie eignet sich auch zur Verbesserung des Verlaufs und des Benetzungsvermögens von Decklacken, die ohne Grundierung auf das zu lackierende Kunststoffteil aufgetragen werden. Bei diesen Lacken handelt es sich ebenso wie bei den genannten Decklacken auf den genannten Grundierungen vorzugsweise um solche auf Basis der obengenannten Zweikomponenten-Polyurethan-Bindemittel.

Die genannten Kunststofflacke werden insbesondere vorteilhaft zur Herstellung von thermoplastischen

Kunststoffen eingesetzt. Als erfindungsgemäß zu lackierende Kunststoffe kommen beispielsweise Polycarbonate, Polypropylene, Polysiloxane, Polyesterkunststoffe, Polyurethane und insbesondere Polysiloxan-modifizierte Kunststoffe wie beispielsweise Polyorganosiloxan-Polycarbonat-Blockcopolymere der in DE-OS 3 347 071 beschriebenen Art, deren Legierungen (mit kautschukelastischen Polymerisaten und gegebenenfalls thermoplastischen Polyalkylenterephthalaten, wie sie ebenfalls in DE-OS 3 347 071 beschrieben sind), ihre Abmischungen mit Polyisobutylenen, ihre Legierungen mit Styrol-Maleinsäureanhydrid-Copolymerisaten, wie sie beispielsweise in EP-A-0 225 518 beschrieben sind, ihre Legierungen mit speziellen thermoplastischen Polyestern, wie sie beispielsweise in DE-OS 3 604 475 beschrieben sind oder auch thermoplastische Polysiloxan-Polyester(carbonat)-Block-copolymere der in DE-OS 3 344 911 beschriebenen Art in Betracht.

Das eingangs genannte, der Erfindung zugrundeliegende Problem stellt sich insbesondere im Falle der genannten Siloxan-modifizierten Polycarbonate bzw. der beispielhaft genannten Legierungen dieser Siloxan-modifizierten Polycarbonate mit den anderen Kunststoffen, da sich diese Kunststoffe durch eine besonders schlechte Benetzbarkeit mit den üblichen Beschichtungsmitteln auszeichnen. Die erfindungsgemäße Verwendung gestattet somit insbesondere die überwindung der mit der Lackierung dieser Kunststoffe verbundenen Schwierigkeiten, die in der Praxis insbesondere bei der Lackierung der Kunststoffe mittels Roboter-Spritzauftrag beobachtet wurden. Die erfindungsgemäße Verwendung gestattet nun erstmals die problemlose Lackierung der beispielhaft genannten Kunststoffe mittels dieser, in der Automobilindustrie weit verbreiteten Lackiermethode.

Beispiele

In den nachfolgenden Beispielen wurde jeweils ein Kunststoffstoßfänger aus einem handelsüblichen Polysiloxanmodifizierten Polycarbonat (®Makroblend EC 900, Hersteller: Bayer AG, Leverkusen) lackiert. Vor dieser Lackierung wurden die Stoßfänger in einer dreistufigen "Power-Wasch-Spritzreinigung" vorbehandelt, um Schmutzreste restlos zu beseitigen. Die Oberflächenspannung der Stoßfänger lag hiernach im Bereich von 25-35 mN/m. Unmittelbar vor der ersten Lackierung (Primerauftrag) wurden die Teile mit ionisierter Luft abgeblasen um elektrostatische Aufladungen abzubauen.

Beispiel 1 (Vergleichsbeispiel)

| Zusammensetzung der Grundierung (Primer): | |
|---|---|
| Polyurethanharz[1)] | 17,9 Gew.-Teile |
| Lösergemisch[2)] | 68,2 Gew.-Teile |
| Titanpigment (Rutil) | 4,9 Gew.-Teile |
| Talkum feinst | 1,8 Gew.-Teile |
| Kreide[3)] | 1,8 Gew.-Teile |
| Schwarzpigment[4)] | 2,4 Gew.-Teile |
| Antiabsetzmittel[5)] | 3,0 Gew.-Teile |

[1)] Handelsüblches, nicht reaktives Polyurethanharz ®Desmolac 4125, Hersteller: Bayer AG, Leverkusen
[2)] Toluol/Diaceton/Isopropanol im Gewichtsverhältnis 1:1:1
[3)] ®Millicarb der Firma Omya, Köln
[4)] Ruß-Pigment, 20 %ig in Methoxypropylacetat
[5)] ®Bentone 38, 10 %iger Aufschluß der Firma Kronos Titan GmbH, Leverkusen

Auf einen der obengenannten Kunststoffstoßfänger wurde mittels Roboter-Spritzauftrag die genannte Grundierung in dünner Schicht (Trockenfilmstärke: 5 bis 10 µm) appliziert.

Bei näherer Betrachtung der lackierten Oberfläche zeigte sich, daß keine ausreichende Benetzung (Verfließen der Lacktröpfchen ineinander) stattfand, was bei der weiteren Lackierfolge (Decklackapplikation) zu Fehlergebnissen wie z.B. Nadelstiche bzw. unruhige, schlecht verlaufende Oberflächen, führt.

Beispiel 2 (erfindungsgemäß)

Herstellung eines erfindungsgemäßen Zusatzmittels (Aminogruppen aufweisendes Polysiloxan):

In einem 1 l-Dreihalskolben mit Rührer, Thermometer und Rückflußkühler werden 935 g Octamethylcyclotetrasiloxan, 27,5 g γ-Aminopropyltriethoxysilan und 37,5 g einer 10 %igen Lösung von Kaliumhydroxid in Ethanol vorgelegt und 5 Stunden bei 140° C unter Destillatabnahme gerührt. Dann wird unter 80° C abgekühlt, und es werden 4,4 g Essigsäure zugefügt. Es wird noch 1 Stunde bei 80° C gerührt und dann 3,7 g wasserfreie Soda zugegeben, der Druck auf 30 bis 40 mbar reduziert und bei diesem Druck bis 140° C Sumpftemperatur destilliert. Anschließend wird die Vorlage gewechselt, der Druck auf 5 bis 10 mbar reduziert und 1 Stunde bei 140° C und 5 bis 10 mbar ausgeheizt. Nach Abkühlen auf unter 30° C und Druckausgleich mit Stickstoff wird filtriert.

Das resultierende, klare und leicht gelbliche Aminopolysiloxan-Öl besitzt folgende Kenndaten:

Viskosität: 344 m.Pas (Köppler 23° C)

Feststoffgehalt: 95,1 % (nach DIN 53 182)

Titration: 0,14 mMol $NH_2$/g ( ≙ 0,2 % N)

Dichte: 0,975 g/ml bei 23° C

Beispiel 1 wurde wiederholt, mit dem Unterschied, daß der genannten Grundierung 1 Gew.-% des Aminopolysiloxan-Öls zugemischt wurde.

Bei näherer Betrachtung der jetzt erhaltenen, mit der Grundierung beschichteten Kunststoffoberfläche wurde festgestellt, daß eine einwandfreie Verfließung der Lacktröpfchen (Benetzung) stattfand.

Die so grundierte Oberfläche war einwandfrei für weitere Lackierschritte präpariert.

## Ansprüche

1. Verwendung von Aminogruppen aufweisenden Polysiloxanen als den Verlauf und die Benetzung verbessernde Zusatzmittel in Kunststofflacken auf Polyurethanbasis.

2. Verwendung gemäß Anspruch 1, dadurch gekennzeichnet, daß man als Aminogruppen aufweisende Polysiloxane solche verwendet, in denen in statistischer Verteilung Struktureinheiten der Formeln I bis VI

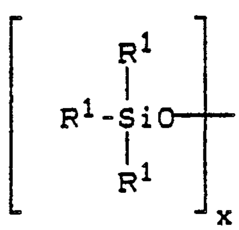
I

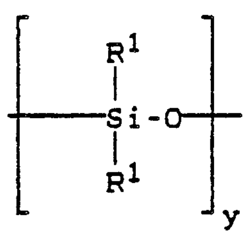
II

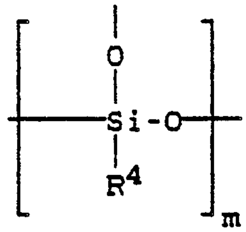
III

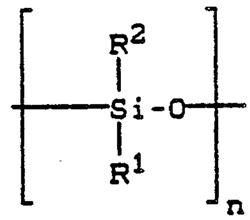

IV

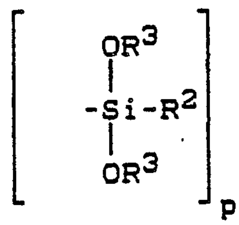

V

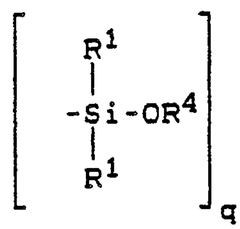

VI

vorliegen, wobei
$R^1$ unabhängig voneinander jeweils für Alkylgruppen mit 1 bis 6 Kohlenstoffatomen, Vinylgruppen oder Phenylgruppen steht,
$R^2$ für einen aminogruppenhaltigen Alkyl- oder Arylrest mit primären, sekundären oder tertiären Aminogruppen und insgesamt 2 bis 20 Kohlenstoffatomen steht,
$R^3$ für Alkylgruppen mit 1 bis 6 Kohlenstoffatomen steht,
$R^4$ für $C_1$-$C_6$-Alkylgruppen, Phenylgruppen und/oder Aminoalkylgruppen mit 2 bis 20 Kohlenstoffatomen steht,
und die einzelnen Struktureinheiten im statistischen Mittel pro Molekül in der durch die Indices x, y, m, n, p und q angegebenen Anzahl vorliegen, wobei
m, q und x für gleiche oder verschiedene, ganze oder (im statistischen Mittel) gebrochene Zahlen von 0 bis 5 stehen,
die Summe m + n + p eine ganze oder (im statistischen Mittel) gebrochene Zahl von 1 bis 20 ergibt und
y für eine ganze oder (im statistischen Mittel) gebrochene Zahl von 10 bis 1400 steht,
mit der Maßgabe, daß die genannten Substituenten und die genannten Zahlenwerte der Indices einem Molekulargewicht der Polysiloxane von 400 bis 110 000, vorzugsweise von 1000 bis 10 000 und einem Stickstoffgehalt der Polysiloxane in Form von primären, sekundären oder tertiären Aminogruppen von 0,01 bis 6 Gew.-%, vorzugsweise 0,05 bis 1 Gew.-% entsprechen.

3. Verwendung gemäß Anspruch 1 und 2, dadurch gekennzeichnet, daß es sich bei dem Kunststofflack um ein physikalisch trocknendes Beschichtungsmittel handelt, dessen Bindemittel aus einem ausreagierten, in organischen Lösungsmitteln löslichen Polyurethan besteht.

4. Verwendung gemäß Anspruch 1 und 2, dadurch gekennzeichnet, daß es sich bei dem Kunststofflack um ein Beschichtungsmittel handelt, dessen Bindemittel ein Zweikomponenten-System auf Basis einer Polyisocyanatkomponente und einer Polyhydroxylkomponente darstellt.

5. Verwendung gemäß Anspruch 1 und 2, dadurch gekennzeichnet, daß es sich bei dem Kunststofflack um ein Beschichtungsmittel handelt, dessen Bindemittel ein Einkomponenten-System auf Basis einer Polyisocyanatkomponente mit blockierten Isocyanatgruppen und einer Polyhydroxylkomponente darstellt.

6. Verwendung gemäß Anspruch 1 bis 5, dadurch gekennzeichnet, daß das Aminogruppen aufweisende Polysiloxan den Kunststofflacken in einer Menge von 0,1 bis 5 Gew.-%, vorzugsweise 0,5 bis 2 Gew.-%, bezogen auf den gebrauchsfertigen Lack zugefügt wird.